# EUROPEAN PATENT SPECIFICATION

(11) **EP 1 553 061 B1**
(45) Date of publication and mention of the grant of the patent: **21.09.2011**
(21) Application number: 03762882.3
(22) Date of filing: 04.07.2003
(51) Int. Cl.: C03B 17/06

(54) **DEVICE FOR MANUFACTURING SHEET GLASS**
VORRICHTUNG ZUR HERSTELLUNG VON TAFELGLAS
DISPOSITIF DE FABRICATION D'UNE FEUILLE DE VERRE

(30) Priority: 08.07.2002 JP 2002198946
(43) Date of publication of application: 13.07.2005
(73) Proprietor: ASAHI GLASS COMPANY LTD., Tokyo 100-8405 (JP)
(72) Inventor: SHIRAISHI, Yoshihiro, Asahi Glass Company, Limited, Yokohama-shi, Kanagawa 230-0045 (JP); SAKAMOTO, Osamu, Asahi Glass Company, Limited, Yokohama-shi, Kanagawa 230-0045 (JP)
(74) Representative: Müller-Boré & Partner Patentanwälte
(86) International application number: PCT/JP2003/008531
(87) International publication number: WO 2004/005204

(56) References cited:
- EP-A1- 0 884 283
- EP-A1- 0 884 283
- JP-A- 2001 247 320
- JP-A- 2002 167 226
- US-A- 1 627 428
- US-A- 3 433 613
- US-A- 3 537 834

## Description

The present invention relates to an apparatus for manufacturing sheet glass, in particular an apparatus for manufacturing glass into a thin sheet, the glass having a high devitrification temperature.

As a process for manufacturing thin sheet glass having high quality, there has been known a process called an overflow fusion process.

The overflow fusion process is a process wherein a glass ribbon is formed by converging streams of molten glass just under a lower converged edge portion of a forming body having a wedge-shaped form converging downwardly in section while flowing down the streams of molten glass along both lateral sides of the forming body, and wherein the glass ribbon is formed into thin sheet glass by downwardly pulling the glass ribbon so as to remove distortion remaining in the glass ribbon while gradually cooling the glass ribbon.

Such a forming process needs to complete forming of the glass ribbon just after the streams of glass has converged just under the lower edge portion of the forming body having a wedge-shaped form in section and to prevent the glass ribbon from being deformed after completion of forming of the glass ribbon. For this reason, it has been difficult to obtain sheet glass having high precision if the glass has too high or low a viscosity in the vicinity of the lower edge portion of the forming body having a wedge-shaped form in section. In the case of forming by the conventional overflow fusion process, thin sheet glass has been manufactured such that the glass has a viscosity in a range from 30,000 to 1,000,000 poises at the lower edge portion of the forming body.

Since the glass viscosity of a glass ribbon has limits in the vicinity of the lower edge portion of the forming body having a wedge-shaped form in section when the glass ribbon is formed by the overflow fusion process as explained, the viscosity at the devitrification temperature of glass capable of being formed (i.e., the viscosity at a temperature that glass is devitrified) has been restricted. Specifically, glass, which starts being devitrified at a low viscosity (which has a high devitrification temperature), such as glass having a viscosity of less than 30,000 poises at the devitrification temperature, has not been able to be formed without being inherently devitrified. Supposing that glass having a viscosity of less than 30,000 poises, in particular from 10,000 to 20,000 poises at the devitrification temperature, is formed by the overflow fusion process, devitrification might be avoided. However, the glass ribbon is abruptly extended by gravity applied to the glass ribbon per se or a force downwardly pulling the glass ribbon since the glass ribbon has a low viscosity in the vicinity of the lower edge portion of the forming body. As a result, it is impossible to form the glass ribbon so as to have a uniform thickness since the glass ribbon is broken at an intermediate portion thereof or has too thin a thickness even if the glass ribbon is not broken. From this viewpoint, manufacturing apparatuses employing the conventional overflow fusion process have a drawback that it is impossible to form special glass having a high devitrification temperature, such as a substrate for a flat panel display or information recording medium.

Additionally, the conventional overflow fusion process has needed to downwardly pull a glass ribbon in a vertical direction until the glass ribbon has been completely solidified and be cut, which has required a tall building and an operation space extending long in a vertical direction. Further, the conventional overflow fusion process has a drawback that the distortion remaining in glass is removed in an insufficient way since it is impossible to have a sufficient annealing time because of a limitation to the height of the building.

US-patent 1,627,428 describes a method of forming sheet glass, consisting of causing molten glass to flow along a directing means and around opposite sides of a tip portion disposed at the discharge end of the means, the glass merging at the outer edge of the tip portion and flowing therefrom in single sheet form.

EP-A-0 884 283 describes a process for forming a glass sheet, which is a process for continuously forming a glass sheet, and which comprises a step of introducing a vapor film-forming agent, which is not vapor at least around room temperature and which is vapor at a temperature above the glass transition point of the glass, into a support composed of a structure or a material capable of internally containing liquid, and a step of sliding the support and the glass of which temperature is above the glass transition point against each other via a thin layer of a vaporized vapor film-forming agent.

The present invention has been proposed in consideration of such circumstances. It is an object of the present invention to provide an apparatus for manufacturing thin sheet glass, which is capable of drastically easing known limitations to the viscosity of glass that glass, which is likely to be devitrified, cannot be formed by the overflow fusion process, and which is capable of easily forming even special glass having a high devitrification temperature, such as glass to be used as a substrate for a flat panel display or information recording medium.

It is another object of the present invention to provide an apparatus for manufacturing thin sheet glass, which is capable of reliably removing distortion remaining in glass since it is possible to ensure a sufficient annealing time without need of a tall building and an operation space extending long in a vertical direction.

In order to attain the objects, the present invention provides an apparatus for manufacturing a thin sheet glass, comprising a forming body including a main body having a cross-sectional shape converging downwardly, the main body being configured to converging streams of molten glass into a single glass ribbon at a lower converged edge portion thereof, the streams of the molten glass flowing down along both surface of the main body; and edge members, the edge members being configured to restrict a width of the molten glass, wherein the apparatus is configured such that the glass ribbon formed by the forming body is downwardly pulled to form the thin sheet glass; characterized in that the apparatus further comprises a non-contact support member disposed in the vicinity of the lower converged edge portion of the main body, the non-contact support member being configured to form a thin gas layer on a supporting surface thereof, wherein the glass ribbon is supported over an entire width thereof in a non-contact way by the non-contact support member in a course wherein the glass ribbon is downwardly pulled, wherein the non-contact support member comprises a rotary roller, the rotary roller including a roller base member, which is made of a base material configured to contain a liquid therein or has a structure configured to contain a liquid therein, wherein a vapor-film forming agent, which is not in a gas state at a temperature in the vicinity of room temperature but is in a gas state at a temperature of not lower than the glass transformation point, is introduced in a liquid state into the roller base member, wherein the vapor-film forming agent is evaporated by high heat from the glass ribbon, and wherein the glass ribbon is supported through a thin gas layer, which is formed from an evaporated portion of the vapor-film forming agent.

In accordance with the present invention, it is possible to reduce a force applied to a low viscous portion of the glass ribbon in the vicinity of the lower edge portion of the forming body since the glass ribbon, which has been formed by the forming body according to the overflow fusion process, is pulled down via the non-contact support member, which supports the glass ribbon in a non-contact state through the thin gas layer. By this arrangement, even if glass, which has a viscosity of less than 30,000 poises at the devitrification temperature, is formed according to the overflow fusion process, the glass ribbon can be prevented from being abruptly extended by the own weight or a pulling force. Additionally, it is possible to prevent the glass ribbon from being abruptly cooled or being damaged since the glass ribbon is supported through the thin gas layer having a small thermal conduction.

In one mode of the present invention, the rotary roller is configured to support the pulled glass ribbon so as to manufacture a sheet of glass from the molten glass which has a viscosity of less than 30,000 poises at the lower edge portion of the main body. Thus, the present invention can form even special glass having a high devitrification temperature (having a viscosity of less than 30,000 poises at the devitrification temperature), such as glass to be used as a substrate for a flat panel display or information recording medium, since it is possible to apply the overflow fusion process without limitations to the viscosity of the glass ribbon.

By employing the rotary roller as the non-contact support member, the entire width of the pulled-down glass ribbon is supported by an upper portion of the peripheral surface of the rotary roller, and then the glass ribbon slides down along the peripheral surface of the rotary roller and is pulled in a downward direction again or is pulled in a horizontal direction. By this arrangement, the glass ribbon can smoothly move without staying on the non-contact support member. In this case, the rotary roller may be configured to rotate in a direction opposite to the direction to pull the glass ribbon.

The non-contact support member in another mode which is not within the scope of the present invention comprises an inclined plate, the inclined plate including a plate base member, which is made of a base material capable of containing a liquid therein or has a structure capable of containing a liquid therein, wherein a vapor-film forming agent, which is not in a gas state at a temperature in the vicinity of room temperature but is in a gas state at a temperature of not lower than the glass transformation point, is introduced in a liquid state into the plate base member, wherein the vapor-film forming agent is evaporated by high heat from the glass ribbon, wherein the glass ribbon is supported through a thin gas layer, which is formed from the evaporated portion of the vapor-film forming agent, and wherein the inclined plate has a supporting surface inclined so as not to be perpendicular to the direction to pull the glass ribbon. By employing the inclined plate as the non-contact support member, the pulled-down glass ribbon is supported by the inclined plate, and then the glass ribbon slides down along the inclined plate and is pulled in a downward direction again or is pulled in a horizontal direction. By this arrangement, the glass ribbon can smoothly move without staying on the non-contact support member.

As another mode of the present invention, the apparatus may comprise a non-contact horizontally pulling device, the non-contact horizontally pulling device being configured to horizontally pull, in a non-contact state through a thin gas layer, the glass ribbon, which is pulled down via the non-contact support member. By this arrangement, the horizontally pulled glass ribbon has one side brought into contact with air and the other side brought into contact with the thin gas layer formed by the non-contact support member. Even if the glass ribbon is horizontally pulled, the glass ribbon can be gradually cooled since the air and the thin gas layer both have a small thermal conduction. Accordingly, it is possible to reliably remove distortion remaining in the glass since it is possible to ensure a sufficient annealing time without need of a tall building and an operation space extending long in a vertical direction as in the prior art employing the overflow fusion process.

The non-contact horizontally pulling device in a specific preferred mode of the present invention comprises a direction-changing roller and a conveying supporter. The direction-changing roller includes a roller base member, which is made of a base material configured to contain a liquid therein or has a structure configured to contain a liquid therein, wherein a vapor-film forming agent, which is not in a gas state at a temperature in the vicinity of room temperature but is in a gas state at a temperature of not lower than the glass transformation point, is introduced in a liquid state into the roller base member, wherein the vapor-film forming agent is evaporated by high heat from the glass ribbon, and wherein the pulled-down glass ribbon is turned in a horizontal direction by the direction-changing roller through a thin gas layer, which is formed from an evaporated portion of the vapor-film forming agent. The conveying supporter includes a supporter base member, which is made of a base material configured to contain a liquid therein or has a structure configured to contain a liquid therein, wherein a vapor-film forming agent, which is not in a gas state at a temperature in the vicinity of room temperature but is in a gas state at a temperature of not lower than the glass transformation point, is introduced in a liquid state into the support base member, wherein the vapor-film forming agent is evaporated by high heat from the glass ribbon, and wherein the glass ribbon, which has been turned by the direction-changing roller, is conveyed and supported by the conveying supporter through a thin gas layer, which is formed from the evaporated portion of the vapor-film forming agent.
Fig. 1 is a schematic view of the entire structure of an apparatus for manufacturing sheet glass, according to the present invention;
Fig. 2 is a front view of a forming body;
Fig. 3 is a perspective view of the forming body;
Fig. 4 is a schematic view of a rotary roller, which is an embodiment of a non-contact support member;
Fig. 5 is a cross-sectional view of the rotary roller;
Fig. 6 is a schematic view of an inclined plate, which is another embodiment of the non-contact support member which is however not within the scope of the present invention; and
Fig. 7 is a schematic view of an embodiment of a conveying support member.

Now, preferred embodiments of the apparatus for manufacturing thin sheet glass, according to the present invention, will be described in detail in reference to the accompanying drawings.

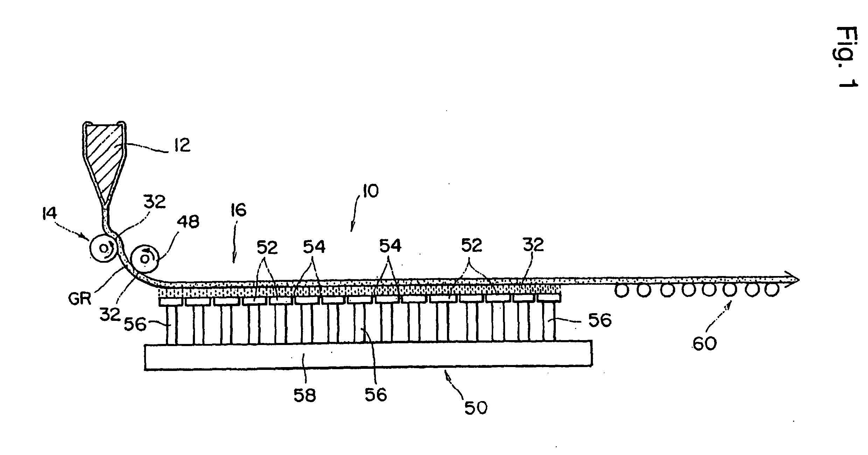

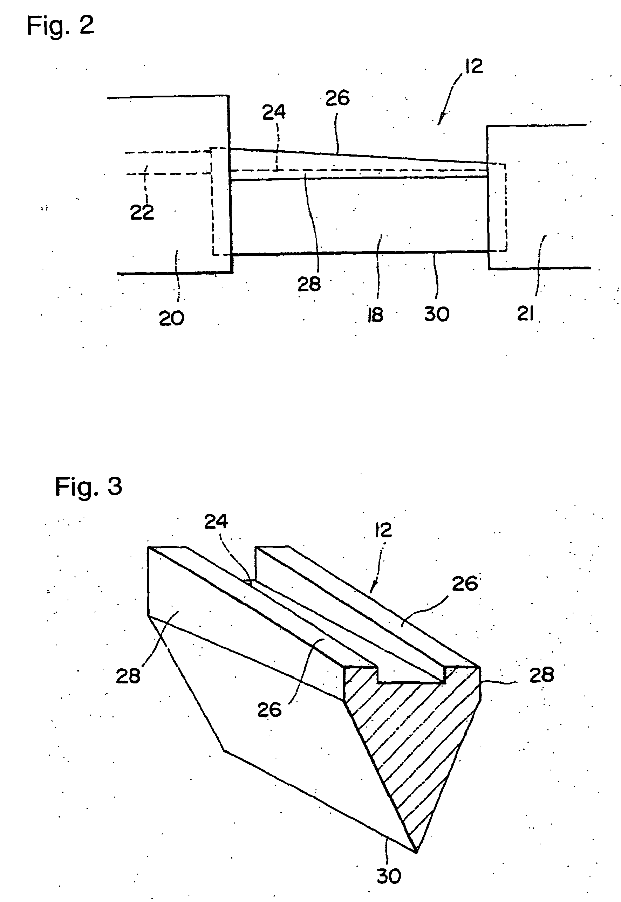

Fig. 1 is a schematic view of the entire structure of an apparatus for manufacturing thin sheet glass, according to the present invention, Fig. 2 is a front view of a forming body, and Fig. 3 is a cross-sectional view of the forming body.

The apparatus for manufacturing thin sheet glass 10, according to the present invention comprises the forming body 12; a non-contact support member 14 for supporting a glass ribbon GR over the entire width in a non-contact state, the glass ribbon being pulled down from the forming body 12; and a horizontally pulling device 16 for horizontally pulling the downwardly pulled glass ribbon GR in a non-contact state.

As shown in Fig. 2 and Fig. 3, the forming body 12 comprises a main body 18 having a wedge-shaped form converging downwardly in section, and lateral end members 20 and 21 disposed both side edges of the main body 18 to restrict the width of molten glass G. The lateral member 20 has a molten glass introduction hole 22 formed therein. Although not shown in the drawings, the introduction hole 22 is connected to a melting furnace with refined molten glass G contained therein, and the introduction hole is used for supplying the molten glass G from the melting furnace to a channel 24 formed in the main body 18.

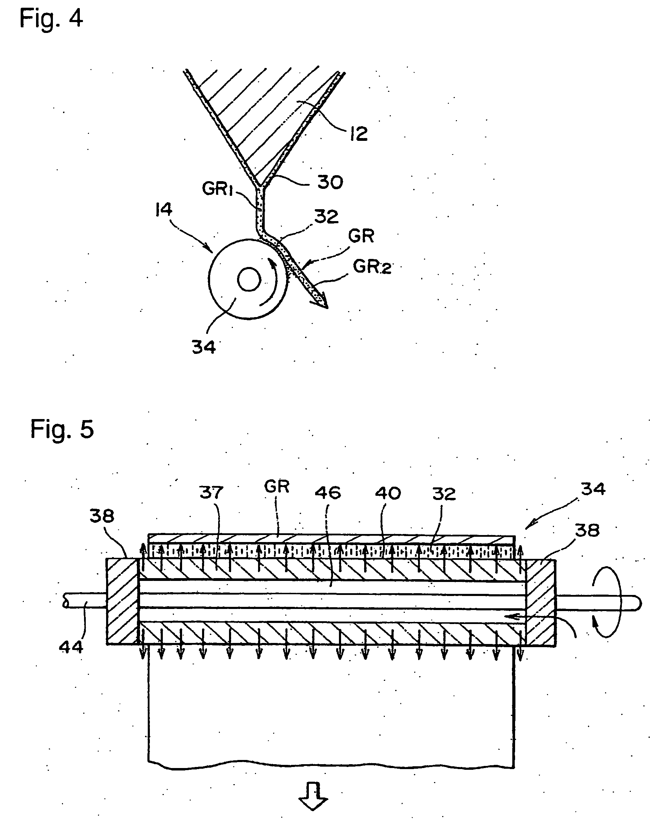

The molten glass G supplied into the channel 24 flows along the channel 24 from a left side to a right side in Fig. 3 and overflows upper edges 26. The molten glass G that has overflowed flows downward along both surfaces 28 of the main body 18 as shown in Fig. 4, and streams of the molten glass converge into a ribbon-shaped glass ribbon GR at a lower edge portion 30. A downwardly pulling force is applied to the glass ribbon GR by conveying driving rollers 60 stated later, whereby the glass ribbon GR is formed into desired thin sheet glass. The main body 18 is made of, e.g., a refractory material, such as an alumina material or a zirconia material, or a refractory material coated with refractory metal, such as platinum or a platinum alloy.

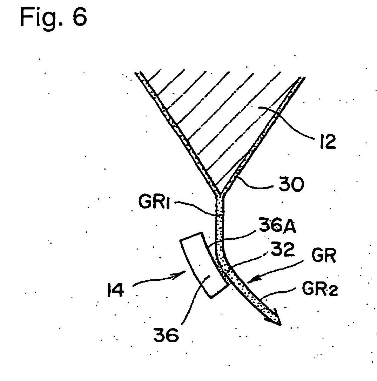

The non-contact support member 14 may have any structure as long as the support member can support the glass ribbon GR over the entire width in a non-contact state through a thin gas layer 32 and as long as the glass ribbon GR can downwardly move in a smooth way without staying on the non-contact support member 14. For example, a rotary roller 34 as shown in Fig. 4, or an inclined plate 36 as shown in Fig. 6 may be advantageously applicable.

Fig. 4 shows a case wherein the non-contact support member 14 comprises the rotary roller 34. The rotary roller 34 is configured so that the roller includes a roller base member, which is made of a base material capable of containing a liquid therein or has a structure capable of containing a liquid therein, that a vapor-film forming agent, which is not in a gas state at a temperature in the vicinity of room temperature (about 20 to 30°C) but is in a gas state at a temperature of not lower than the glass transformation point, is introduced in a liquid state, that the vapor-film forming agent is evaporated by high heat from the glass ribbon GR, and that the glass ribbon GR is supported through a thin gas layer, which comprises a vapor film formed from an evaporated portion of the vapor-film forming agent. As shown in Fig. 5, the rotary roller 34 has a peripheral portion 37 of a roller cylinder made of such a roller base member capable of containing the vapor-film forming agent therein, and both roller edge portions 38 and 38 are made from a base material with no vapor-film forming agent contained therein. The vapor-film forming agent introduced into the roller base member is evaporated from a roller surface 40 by high heat from the glass ribbon GR. The rotary roller 34 is rotated by an unshown electric motor. By this arrangement, the glass ribbon GR can be supported in such a state that the thin glass layer 32 made of the vapor film is stably formed between the glass ribbon GR and the rotary roller 34. Although the rotary roller 34 may be rotated in either direction, it is more preferred that the rotary roller be rotated in the direction opposite to the direction to pull down the glass ribbon GR.

As the method for supplying the vapor-film forming agent to the roller base member, the vapor-film forming agent may be spread into the entire roller base member by being supplied in a central hollow portion 46 defined between a rotary shaft 44 of the rotary roller 34 and the peripheral portion 37, or a wet roller (not shown) may be disposed so as to have contact with a side of the rotary roller 34 remote from the glass ribbon GR so that the vapor-film forming agent supplied to the wet roller is transferred onto the rotary roller. It is also acceptable to adopt a spray system wherein the vapor-film forming agent is sprayed on a surface of the rotary roller 34 by a nozzle. The point is that any supply method is acceptable as long as it is possible to supply the vapor-film forming agent so that the vapor-film forming agent can be sufficiently contained in the roller base member of the rotary roller 34.

The roller base member is made of such a base material capable of containing a liquid therein or has such a structure capable of containing a liquid therein. For example, a porous member or a fibrous material is advantageously employed. In the case of a porous member, it is preferred that the porous member have through holes. The porous material has a surface formed with fine holes, which have a hole diameter of preferably 5 mm or below, more preferably 1 mm or below, or further preferably 100 µm or below. It is preferred that the roller base member be made of a material having a high affinity with the vapor-film forming agent.

As the basic material of the roller base member, porous hydrophilic carbon is particularly appropriate. Other materials, e.g., a polymer material derived from a natural product, such as cellulose, paper, wood or bamboo, a synthetic polymer material, such as a thermoplastic resin, a thermosetting resin or rubber, and a carbon material are advantageously applicable. A metal material, such as iron, stainless steel or platinum, a metal oxide, such as an aluminum oxide, a zirconium oxide, silicon carbide or silicon nitride, metal carbide or metal nitride are also applicable.

As the vapor-film forming agent, it is possible to employ various kinds of substances, which is an organic substance or inorganic substance that is liquid at room temperature and a gas at a temperature of not lower than the glass transformation point. From the viewpoint of supply operation to the forming body 12, it is preferred that the vapor-film forming agent have a melting point of not higher than 40°C and a boiling point of from 50 to 500°C, more preferably not higher than 300°C, at atmospheric pressure. It is additionally preferred that the vapor evaporated from the vapor-film forming agent do not react chemically with the glass or the rotary roller to such a degree to have an adverse effect on the glass or the rotary roller, and that the vapor have a low toxicity and be incombustible at a service temperature. Water may be employed as a typical example of the vapor-film forming agent. As explained, it is necessary to employ, as the vapor-film forming agent, a liquid that can be instantly evaporated by high heat from the glass ribbon GR to form a stable vapor film. Since the thin glass layer 32 of the vapor film that is formed from a liquid instantly evaporated by high heat has a significantly lower thermal conductivity than a liquid or a solid material, the thin glass layer can effectively form a heat-insulated circumference for the glass ribbon GR.

Fig. 6 shows a case, which is not within the scope of the present invention, wherein the non-contact support member 14 comprises the inclined plate 36. The inclined plate 36 is configured so that the inclined plate includes a plate base member, which is made of a base material capable of containing a liquid therein or has a structure capable of containing a liquid therein, that a vapor-film forming agent, which is not in a gas state at a temperature in the vicinity of room temperature but is in a gas state at a temperature of not lower than the glass transformation point, is introduced in a liquid state, that the vapor-film forming agent is evaporated by high heat from the glass ribbon GR, that the glass ribbon GR is supported through a thin gas layer 32, which comprise a vapor-film formed from an evaporated portion of the vapor-film forming agent, and that the inclined plate has a supporting surface 36A inclined so as not to be perpendicular to the direction to pull the glass ribbon GR. The plate base member forming the inclined plate 36, the basic material of the plate base member, the vapor-film forming agent, and the method for providing the inclined plate 36 with the vapor-film forming agent are similar to those in the rotary roller 34 stated earlier. By this arrangement, since the vapor-film forming agent introduced into the plate base member is evaporated from the inclined plate 36 by high heat from the glass ribbon GR, the glass ribbon GR can be supported in such a state that the thin glass layer 34 of the vapor film is stably formed between the glass ribbon GR and the inclined plate 36. In connection with to what degree the inclined plate 36 should be inclined with respect to the horizontal direction, it is sufficient that the inclined plate is inclined at such an angle that the glass ribbon GR supported by the inclined plate 36 can smoothly move without staying on the inclined plate. In this case, it is preferred to make the inclination angle of the inclined plate 36 variable according to a viscosity and a thickness since whether or not the glass ribbon GR can smoothly move on the inclined plate or not is affected by the viscosity and the thickness of the glass ribbon GR. It is preferred from the viewpoint of easily supporting the glass ribbon GR that the supporting surface 36A of the inclined plate that supports the glass ribbon GR is curved in a concave shape.

As shown in Fig. 1, the non-contact horizontally pulling device 16 is a device wherein the glass ribbon GR, which is pulled down via the non-contact support member 14, is horizontally pulled in a non-contact state through a thin glass layer 32. For example, the non-contact horizontally pulling device comprises a direction-changing roller 48 for directing the pulled-down glass ribbon GR to a horizontal direction in a non-contact state, and a conveying supporter 50 for conveying and supporting the horizontally-pulled glass ribbon GR in a non-contact state. Since the structure of the direction-changing roller 48 is similar to that of the rotary roller 34 stated earlier, explanation of the direction-changing roller will be omitted.

The conveying supporter 50 of Fig. 1 is of fixed bed type. In the fixed bed type conveying supporter 50, a plurality of rectangular supporting members 52 are disposed so as not to be movable at least in a direction parallel with the direction to convey the glass ribbon GR, and adjacent supporting members 52 have a groove 54 formed therebetween so as to escape vapor evaporated from the vapor-film forming agent. Each of the grooves 54 is important for releasing vapor of the thin glass layer 32, which comprises a vapor film formed between the supporting members 52 and the glass ribbon GR. By this arrangement, the thin glass layer 32 of a vapor film can be stably formed between the glass ribbon GR and the supporting members 52. The respective supporting members 52 are supported by a base 58 through posts 56. The supporter base member forming each of the supporting member 52, the basic material of the supporter base member, the vapor-film forming agent, and the method for providing the vapor-film forming agent to the supporting members are similar to those of the rotary roller 34 stated earlier. The pulling tension that pulls the glass ribbon GR above the supporting members 52 in the conveying direction is created by contact resistance between the plural conveying driving rollers 60 and the glass ribbon GR.

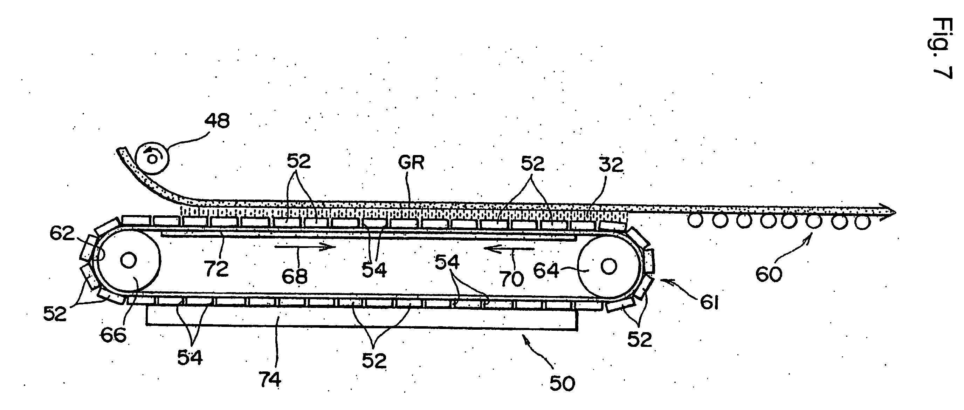

The conveying supporter 50 of Fig. 7 is of conveyor type, wherein a plurality of supporting members 52 are fixedly disposed in a longitudinal direction at intervals on a surface of an endless belt 62 of a belt conveyor 61. Adjacent supporting members 52 have a groove 54 formed therebetween so as to extend in a direction perpendicular to the direction to convey the glass ribbon GR. The endless belt 62 extends between a pair of rollers comprising a driving roller 64 and a driven roller 66, and the endless belt moves in a clockwise direction 68 or in a counterclockwise direction 70 in Fig. 7. The moving speed of the endless belt 62 is set so as to be different from the conveying speed of the glass ribbon GR above the supporting members 52. By this arrangement, the supporting members 52 and the glass ribbon GR slide through a thin glass layer 32 made of a vapor film. The belt conveyor 62 is provided with guide plates 72 for guiding the endless belt 62 on an upper moving path, and a portion of the endless belt 62, which is moving in the upper moving path, moves in a stable way, being guided by the guide plates 72. The supporter base member forming each of the supporting members 52, the basic material of the supporter base member and the vapor-film forming agent are similar to those of the rotary roller 34 stated earlier. In the case of this conveyor type, the endless belt 62 has a supply vessel 74 for the vapor-film forming agent provided in a lower moving path. When supporting members 52 are moving through the lower moving path, the supporting members 52 are supplied with the vapor-film forming agent, passing through the supply vessel 74.

Explanation will be made with respect to a case wherein glass having a high devitrification temperature (having a viscosity of less than 30,000 poises, in particular from 10,000 to 20,000 poises) is formed by the apparatus for forming thin sheet glass 10, thus constructed.

After the glass ribbon GR, which has been formed at the lower edge portion 30 of the forming body 12, is pulled down via the non-contact support member 14, the glass ribbon is pulled in a non-contact state and in a horizontal direction by the non-contact horizontally pulling device 16 to be formed into thin sheet glass.

In the forming of the thin sheet glass, the glass ribbon GR, which has been formed by the forming body 12, is supported over the entire width in a non-contact state through the thin glass layer 32. Thus, as shown in Fig. 4 and Fig. 6, the own weight of a portion GR₁ of the glass ribbon upstream from the non-contact support member 14 is supported by the non-contact support member 14, and the own weight of a portion GR₂ of the glass ribbon downstream from the non-contact support member and the pulling force are restricted from being applied to the upstream portion GR₁ of the glass ribbon. As a result, the forces that are applied to portions of the glass ribbon having a low viscosity in the vicinity of the lower edge portion of the forming body 12 are minimized. Even if glass that has a viscosity of less than 30,000 poises at the lower edge portion of the forming body 12 is formed by the overflow fusion process, the glass ribbon GR is prevented from being abruptly extended by the own weight or the pulling force. Although the glass ribbon GR needs to be pulled down, being gradually cooled, in order to remove distortion in the glass ribbon GR with good precision, the present invention can prevent the glass ribbon GR from being abruptly cooled since the glass ribbon GR is supported through the thin glass layer 32 having a small thermal conduction. Additionally, the glass ribbon GR cannot be damaged since the glass ribbon GR is supported over the entire width through the thin glass layer 32 to prevent the glass ribbon GR from being brought in direct contact with the non-contact support member 14.

Additionally, the apparatus is configured so that even when the glass ribbon GR is horizontally pulled, the glass ribbon GR, which is pulled down via the non-contact support member 14, is turned by the direction-changing roller 48 through the thin glass layer 32 having a small thermal conduction, and the glass ribbon GR thus turned is conveyed and supported by the conveying supporter 50 through the thin glass layer 32 having a small thermal conduction. By this arrangement, it is possible to remove distortion in the glass ribbon GR with good precision since the glass ribbon GR can be gradually cooled while the glass ribbon GR is horizontally pulled.

In accordance with the apparatus for forming thin sheet glass, of the present invention, it is possible to drastically ease known limitations to the viscosity of glass that glass, which is likely to be devitrified, cannot be formed by the overflow fusion process, and to easily form even special glass having a high devitrification temperature, such as glass to be used as a substrate for a flat panel display or information recording medium. Additionally, in accordance with the present invention, it is possible to reliably remove distortion remaining in glass since it is possible to ensure a sufficient annealing time without need of a tall building and an operation space extending long in a vertical direction.

## Claims

1. An apparatus for manufacturing a thin sheet glass (10), comprising a forming body (12) including a main body (18) having a cross-sectional shape converging downwardly, the main body (18) being configured to converging streams of molten glass into a single glass ribbon at a lower converged edge portion (30) thereof, the streams of the molten glass flowing down along both surface (28) of the main body (18); and edge members, the edge members being configured to restrict a width of the molten glass, wherein the apparatus (10) is configured such that the glass ribbon formed by the forming body (12) is downwardly pulled to form the thin sheet glass; **characterized in that**
the apparatus (10) further comprises a non-contact support member (14) disposed in the vicinity of the lower converged edge portion (30) of the main body (18), the non-contact support member (14) being configured to form a thin gas layer (32) on a supporting surface thereof, wherein the glass ribbon is supported over an entire width thereof in a non-contact way by the non-contact support member (14), in a course contact way by the non-contact support member (14) in a course wherein the glass ribbon is downwardly pulled wherein the non-contact support member (14) comprises a rotary roller (34), the rotary roller (34) including a roller base member, which is made of a base material configured to contain a liquid therein or has a structure configured to contain a liquid therein, wherein a vapor-film forming agent, which is not in a gas state at a temperature in the vicinity of room temperature but is in a gas state at a temperature of not lower than the glass transformation point, is introduced in a liquid state into the roller base member, wherein the vapor-film forming agent is evaporated by high heat from the glass ribbon, and wherein the glass ribbon is supported through a thin gas layer (32), which is formed from an evaporated portion of the vapor-film forming agent.

2. The apparatus according to Claim 1, wherein the rotary roller (39) is configured to support the pulled glass ribbon so as to manufacture a sheet of glass from the molten glass which has a viscosity of less than 30,000 poises at the lower edge portion (30) of the main body (18).

3. The apparatus (10) according to Claim 1 or 2, wherein the rotary roller (34) is configured to rotate in a direction opposite to a direction to pull down the glass ribbon.

4. The apparatus (10) according to any one of Claims 1 to 3, further comprising a non-contact horizontally pulling device (16), the non-contact horizontally pulling device (16) being configured to horizontally pull, in a non-contact state through a thin gas layer (32), the glass ribbon, which is pulled down via the non-contact support member (14).

5. The apparatus (10) according to Claim 4, wherein the non-contact horizontally pulling device (16) comprises a direction-changing roller (48) and a conveying supporter (50) ;
the direction-changing roller (48) including a roller base member, which is made of a base material configured to contain a liquid therein or has a structure configured to contain a liquid therein, wherein a vapor-film forming agent, which is not in a gas state at a temperature in the vicinity of room temperature but is in a gas state at a temperature of not lower than the glass transformation point, is introduced in a liquid state into the roller base member, wherein the vapor-film forming agent is evaporated by high heat from the glass ribbon, and wherein the pulled-down glass ribbon is turned in a horizontal direction by the direction-changing roller (48) through a thin gas layer (32), which is formed from an evaporated portion of the vapor-film forming agent; and
the conveying supporter (50) including a supporter base member, which is made of a base material configured to contain a a liquid therein or has a structure configured to contain a liquid therein, wherein a vapor-film forming agent, which is not in a gas state at a temperature in the vicinity of room temperature but is in a gas state at a temperature of not lower than the glass transformation point, is introduced in a liquid state into the support base member, wherein the vapor-film forming agent is evaporated by high heat from the glass ribbon, and wherein the glass ribbon, which has been turned by the direction-changing roller (48), is conveyed and supported by the conveying supporter (50) through a thin gas layer (32), which is formed from the evaporated portion of the vapor-film forming agent.

## Patentansprüche

1. Vorrichtung zum Herstellen eines dünnen Tafelglases (10), umfassend einen formgebenden Körper (12), enthaltend einen Hauptkörper (18) mit einer Querschittsform, die nach unten konvergiert, wobei der Hauptkörper (18) gestaltet ist, um an einem unteren konvergierten Kantenbereich (30) davon Flüsse von geschmolzenem Glas in ein einzelnes Glasband zu konvergieren, wobei die Flüsse des geschmolzenen Glases entlang beider Oberflächen (28) des Hauptkörpers (18) hinunter fließen; und Kantenelemente, wobei die Kantenelemente gestaltet sind, um eine Breite des geschmolzenen Glases einzuschränken, wobei die Vorrichtung (10) so gestaltet ist, dass das durch den formgebenden Körper (12) gebildete Glasband nach unten gezogen wird, um das dünne Tafelglas zu bilden; **dadurch gekennzeichnet, dass**
die Vorrichtung (10) weiter ein berührungsfreies Trägerelement (14) umfasst, das in der Nähe des unteren konvergierten Kantenbereichs (30) des Hauptkörpers (18) angeordnet ist, wobei das berührungsfreie Trägerelement (14) gestaltet ist, um eine dünne Gasschicht (32) auf einer Trägeroberfläche davon zu bilden, wobei das Glasband über eine gesamte Breite davon in einer berührungsfreien Weise durch das berührungsfreie Trägerelement (14) in einem Verlauf, in welchem das Glasband nach unten gezogen wird, getragen wird, wobei das berührungsfreie Trägerelement (14) eine drehbare Rolle (34) umfasst, wobei die drehbare Rolle (34) ein Rollenbasiselement einschließt, welches aus einem Basismaterial hergestellt ist, das gestaltet ist, um darin eine Flüssigkeit zu enthalten oder eine Struktur aufweist, die gestaltet ist, um darin eine Flüssigkeit zu enthalten, wobei ein Dampfschichtbildungsmittel, welches nicht in einem Gaszustand bei einer Temperatur in der Nähe von Raumtemperatur ist, aber in einem Gaszustand bei einer Temperatur von nicht niedriger als der Glastransformationspunkt ist, in einem flüssigen Zustand in das Rollenbasiselement eingeführt ist, wobei das Dampfschichtbildungsmittel durch hohe Wärme von dem Glasband verdampft wird, und wobei das Glasband durch eine dünne Gasschicht (32) getragen wird, welche von einem verdampften Teil des Dampfschichtbildungsmittels gebildet wird.

2. Vorrichtung (10) nach Anspruch 1, wobei die drehbare Rolle (34) gestaltet ist, um das gezogene Glasband zu tragen, um so eine Glasplatte aus dem geschmolzenen Glas herzustellen, welches an dem unteren konvergierten Kantenbereich (30) des Hauptkörpers (18) eine Viskosität von weniger als 30.000 Poise aufweist.

3. Vorrichtung (10) nach Anspruch 1 oder 2, wobei die drehbare Rolle (34) gestaltet ist, um in eine Richtung zu rotieren, die entgegen einer Richtung ist, um das Glasband nach unten zu ziehen.

4. Vorrichtung (10) nach einem der Ansprüche 1 bis 3, weiter umfassend eine berührungsfreie horizontal ziehende Vorrichtung (16), wobei die berührungsfreie horizontal ziehende Vorrichtung (16) gestaltet ist, um das Glasband, welches über das berührungsfreie Trägerelement (14) nach unten gezogen wird, in einem berührungsfreien Zustand über eine dünne Gasschicht (32) horizontal zu ziehen.

5. Vorrichtung (10) nach Anspruch 4, wobei die berührungsfreie horizontal ziehende Vorrichtung (16) eine richtungsändernde Rolle (48) und einen Förderträger (50) umfasst;
wobei die richtungsändernde Rolle (48) ein Rollenbasiselement einschließt, welches aus einem Basismaterial hergestellt ist, das gestaltet ist, um darin eine Flüssigkeit zu enthalten oder eine Struktur aufweist, die gestaltet ist, um darin eine Flüssigkeit zu enthalten, wobei ein Dampfschichtbildungsmittel, welches nicht in einem Gaszustand bei einer Temperatur in der Nähe von Raumtemperatur ist, aber in einem Gaszustand bei einer Temperatur von nicht niedriger als der Glastransformationsspunkt ist, in einem flüssigen Zustand in das Rollenbasiselement eingeführt ist, wobei das Dampfschichtbildungsmittel durch hohe Wärme von dem Glasband verdampft wird, und wobei das nach unten gezogene Glasband durch die richtungsändernde Rolle (48) durch eine dünne Gasschicht (32), welche von einem verdampften Teil des Dampfschichtbildungsmittels gebildet wird, in eine horizontale Richtung gedreht wird; und
der Förderträger (50) ein Trägerbasiselement einschließt, welches aus einem Basismaterial hergestellt ist, das gestaltet ist, um darin eine Flüssigkeit zu enthalten oder eine Struktur aufweist, die gestaltet ist, um darin eine Flüssigkeit zu enthalten, wobei ein Dampfschichtbildungsmittel, welches nicht in einem Gaszustand bei einer Temperatur in der Nähe von Raumtemperatur ist, aber in einem Gaszustand bei einer Temperatur von nicht niedriger als der Glastransformationsspunkt ist, in einem flüssigen Zustand in das Rollenbasiselement eingeführt ist, wobei das Dampfschichtbildungsmittel durch hohe Wärme von dem Glasband verdampft wird, und wobei das Glasband, welches durch die richtungsändernde Rolle (48) gedreht wurde, durch den Förderträger (50) durch eine dünne Gasschicht (32), welche von einem verdampften Teil des Dampfschichtbildungsmittels gebildet wird, befördert und getragen wird.

## Revendications

1. Un dispositif de fabrication d'une mince feuille de verre (10), comprenant un corps de formation (12) y compris un corps principal (18) ayant une forme en coupe transversale convergeant vers le bas, le corps principal (18) étant configuré pour faire converger des flux de verre fondu dans un seul ruban de verre à une partie du bord convergé inférieur (30) de celui-ci, les flux de verre fondu coulent vers le bas le long des deux surfaces (28) du corps principal (18), et des éléments de bord, les éléments de bord étant configuré de manière à limiter la largeur du verre fondu, dans lequel le dispositif (10) est configuré de telle sorte que le ruban de verre formé par le corps de formation (12) est tiré vers le bas pour former la mince feuille de verre; **caractérisée en ce que**
le dispositif (10) comprend en outre un élément de support sans contact (14) disposé à proximité de la partie du bord convergé inférieur (30) du corps principal (18), l'élément de support sans contact (14) étant configuré pour former une fine couche de gaz (32) sur une surface de soutien de celle-ci, dans lequel le ruban de verre est soutenu sur une largeur entière de celle-ci d'une manière sans contact par l'élément de support sans contact (14) dans un trajet dans lequel le ruban de verre est tiré vers le bas, dans lequel l'élément de support sans contact (14) comprend un rouleau rotatif (34), le rouleau rotatif (34), comprenant un élément de base du rouleau, qui se compose d'un élément de base configuré pour contenir un liquide à l'intérieur ou qui a une structure configurée pour contenir un liquide à l'intérieur, dans lequel un agent de vapeur filmogène, qui n'est pas à l'état gazeux à une température avoisinante de la température ambiante, mais qui est dans un état gazeux à une température qui n'est pas inférieure au point de transformation du verre, est introduit à l'état liquide dans l'élément de base du rouleau, dans lequel l'agent de vapeur filmogène est évaporé par la chaleur intense du ruban de verre, et dans lequel le ruban de verre est soutenu à travers une fine couche de gaz (32), qui est formée à partir d'une partie évaporée de l'agent de vapeur filmogène.

2. Le dispositif selon la Revendication 1, dans lequel le rouleau rotatif (34) est configuré pour soutenir le ruban de verre tiré de manière à fabriquer une feuille de verre à partir du verre fondu qui a une viscosité de moins de 30,000 poises à la partie du bord inférieur (30) du corps principal (18).

3. Le dispositif (10) selon la Revendication 1 ou 2, dans lequel le rouleau rotatif (34) est configuré pour tourner dans une direction opposée à la direction dans laquelle le ruban de verre est tiré vers le bas.

4. Le dispositif (10) selon l'une quelconque des Revendications 1 à 3, comprenant en outre un dispositif de traction horizontal sans contact (16), le dispositif de traction horizontal sans contact (16) étant configuré pour tirer horizontalement, dans un état sans contact à travers une fine couche de gaz (32), le ruban de verre, qui est tiré vers le bas via l'élément de support sans contact (14).

5. Le dispositif (10) selon la Revendication 4, dans lequel le dispositif de traction horizontal sans contact (16) comprend un rouleau de changement de direction (48) et un support de transport (50);
le rouleau de changement de direction (48), comprenant un élément de base du rouleau, qui se compose d'un matériau de base configuré pour contenir un liquide à l'intérieur ou qui a une structure configurée pour contenir un liquide à l'intérieur, dans lequel un agent de vapeur filmogène, qui n'est pas à l'état gazeux à une température avoisinante de la température ambiante, mais qui est dans un état gazeux à une température qui n'est pas inférieure au point de transformation du verre, est introduit à l'état liquide dans l'élément de base du rouleau, dans lequel l'agent de vapeur filmogène est évaporé par la chaleur intense du ruban de verre, et dans lequel le ruban de verre tiré vers le bas est tourné dans une direction horizontale par le rouleau de changement de direction (48) à travers une fine couche de gaz (32), qui est formé à partir d'une partie évaporée de l'agent de vapeur filmogène, et
le support de transport (50) comprenant un élément de base du support, qui se compose d'un matériau de base configuré pour contenir un liquide à l'intérieur ou qui a une structure configurée pour contenir un liquide à l'intérieur, dans lequel un agent de vapeur filmogène, qui n'est pas à l'état gazeux à une température avoisinante de la température ambiante, mais qui est dans un état gazeux à une température qui n'est pas inférieure au point de transformation du verre, est introduit à l'état liquide dans l'élément de base du support, dans lequel l'agent de vapeur filmogène est évaporé par la chaleur intense du ruban de verre, et dans lequel le ruban de verre, qui a été tourné par le rouleau de changement de direction (48), est transporté et soutenu par le support de transport (50) à travers une fine couche de gaz (32), qui est formée à partir de la partie évaporée de l'agent de vapeur filmogène.
